# EUROPÄISCHE PATENTSCHRIFT

(11) **EP 1 681 247 B1**
(45) Veröffentlichungstag und Bekanntmachung des Hinweises auf die Patenterteilung: **18.06.2008**
(21) Anmeldenummer: 05112987.2
(22) Anmeldetag: 27.12.2005
(51) Int. Cl.: B65G 1/04, B65G 1/137, B65G 1/06, B65G 1/10

(54) **Vorrichtung zur Sequenzbildung von Ladungsträgern mittels eines Zwischenlagers und Verfahren zur Zwischenlagerung**
Device for the sequence formation of cargo carriers using a buffer warehouse and method of intermediate storage
Dispositif pour former un ordre défini des porte-charges utilisant un entrepôt transitoire et procédé de stockage intermédiaire

(30) Priorität: 18.01.2005 DE 102005002348
(43) Veröffentlichungstag der Anmeldung: 19.07.2006
(73) Patentinhaber: Dematic GmbH, 63073 Offenbach am Main (DE)
(72) Erfinder: Suess, Heiko, 60385 Frankfurt (DE)
(74) Vertreter: Moser & Götze

(56) Entgegenhaltungen:
- EP-A- 0 860 382
- EP-A- 1 354 828
- DE-U1- 29 912 230
- US-A- 5 350 050

## Beschreibung

Die Erfindung betrifft eine Vorrichtung zur Zwischenlagerung von Ladungsträgern mittels eines als Regal ausgebildeten Zwischenlagers mit mehreren Regalebenen gemäß dem Gattungsbegriff des Patentanspruchs 1 sowie ein Verfahren zur Zwischenlagerung von Ladungsträgern gemäß dem Gattungsbegriff des Patentanspruchs 11.

Bei der Kommissionierung von Aufträgen werden die zu einem Auftrag gehörigen Waren häufig auf Ladungsträgern, die üblicherweise eine einheitliche Form aufweisen und beispielsweise als kastenförmige Behälter ausgebildet sind, zusammengestellt. Bei umfangreichen Aufträgen reicht hierzu ein einziger Ladungsträger häufig nicht aus, und es werden mehrere Ladungsträger benötigt. Die Warenzusammenstellung wird dabei häufig von unterschiedlichen Kommissionierern zu unterschiedlichen Zeitpunkten an unterschiedlichen Kommissionierorten vorgenommen. Daher stehen die befüllten Ladungsträger, die zu einem gemeinsamen Auftrag gehören, zu unterschiedlichen Zeitpunkten für eine Gesamtzusammenstellung durch den Versand zur Verfügung. Ein geordneter Ablauf im Versand erfordert jedoch nicht nur die vollständige Bereitstellung aller Positionen eines Auftrags, sondern möglichst auch eine geeignete Reihenfolge der einzelnen Artikel im Hinblick auf die vorgesehenen Transportverpackungen. Das bedeutet, dass an dem jeweiligen Versandarbeitsplatz die zu verpackenden Artikel entsprechend ihrer Größe und hinsichtlich ihrer Verpackungserfordernisse (z.B. Zerbrechlichkeit) der jeweiligen Arbeitskraft nacheinander so angeboten werden sollten, dass sie unter möglichst günstiger Ausnutzung des Nutzvolumens der jeweiligen Verpackung (z.B. Karton) nacheinander abgearbeitet werden können, ohne am Verpackungsarbeitsplatz wesentliche Um- und Zwischenlagerungen vornehmen zu müssen.

Zur Lösung dieser Problematik sind spezielle Zwischenlager bekannt, die im Sinne von Pufferlagern zwischen dem Kommissionierbereich und dem Versandbereich eines Lagers angeordnet sind und die zu einem Auftrag gehörigen Ladungsträger vorübergehend aufnehmen, bis sämtliche Positionen des jeweiligen Auftrags kommissioniert sind, und diese zwischengespeicherten Ladungsträger dann für den Versand in einer jeweils gewünschten Reihenfolge, die auf die Versanderfordernisse abgestellt ist, wieder ausgeben.

Aus der EP 0 860 382 B1 sind beispielsweise Sortierpufferlager bekannt, die auch als Sequencer-Türme bezeichnet werden. Diese sind in Form eines Turms aufgebaut, in dem zwei Reihen von übereinander angeordneten einzelnen Abstellplätzen für Ladungsträger angeordnet sind. Die beiden vertikalen Reihen von Abstellplätzen liegen sich spiegelbildlich im Abstand gegenüber, wobei in dem von ihnen eingeschlossenen Zwischenraum eine Lifteinrichtung vorgesehen ist, die Ladungsträger zu den einzelnen Abstellplätzen transportieren kann. In einer Grundstellung der Lifteinrichtung ist diese Teil des Förderwegs, auf dem die fertig kommissionierten Ladungsträger zur Zwischenlagerung an den Sequencer-Turm geliefert werden bzw. auf dem die zu einem Auftrag gehörigen Ladungsträger zum Versandbereich transportiert werden können, sobald alle zu dem jeweiligen Auftrag gehörigen Ladungsträger im Zwischenspeicher zur Verfügung stehen. Da die Lifteinrichtung bei der Auslagerung der einzelnen Ladungsträger einen völlig wahlfreien Zugriff auf sämtliche Ladungsträger gestattet, kann bei der Auslagerung problemlos eine vorgegebene Reihenfolge eingehalten werden. Kennzeichnend für diese Art der Sequencer-Türme ist eine vergleichsweise hohe Durchsatzleistung; demgegenüber ist aber die zur Zwischenlagerung zur Verfügung stehende Lagerkapazität sehr beschränkt, so dass eine entsprechend große Anzahl dieser hinsichtlich der Investitionskosten aufwändigen Einrichtungen benötigt wird.

Eine andere Art eines Zwischenlagers für die Sequenzbildung ist aus der DE 299 12 230 U1 bekannt. Dieses Zwischenlager besteht aus einer Reihe gleichartiger Lagermodule, die in Linie unmittelbar nebeneinander angeordnet sind. Jedes Lagermodul besteht aus zwei sich gegenüberliegenden, jeweils eine Vielzahl von Regalebenen aufweisenden Lagerregalen, wobei jede Lagerebene eine Mehrzahl von nebeneinander liegenden Abstellplätzen für Ladungsträger aufweist. Zwischen den gegenüberliegenden Lagerregalen ist jeweils eine Lagergasse gebildet, in der ein sich über die Gesamtlänge des jeweiligen Moduls erstreckender Hubbalken angeordnet ist, der vertikal über die gesamte Höhe des Lagerregals verfahrbar ist. Auf dem Hubbalken ist ein in horizontaler Richtung auf diesem verfahrbares Lastaufnahmemittel angeordnet. Dessen Aufgabe ist es, einen zwischenzulagernden Ladungsträger an einen freien Abstellplatz einer Regalebene zu verbringen und diesen jeweils bei Bedarf wieder aus diesem Abstellplatz auszulagern. Die neu einzulagernden Ladungsträger werden dabei jeweils über eine Einlagerbahn und einen daran anschließenden Gurtförderer durch die Längsseite eines Lagerregals in den Arbeitsbereich des jeweils diesem Lagerregals zugeordneten Lastaufnahmemittels befördert und zwischengelagert. In entsprechend umgekehrter Weise erfolgt die Auslagerung mit Hilfe des Lastaufnahmemittels und eines weiteren Gurtförderers, der sich wiederum an der Längsseite des jeweiligen Lagerregals durch dieses hindurch erstreckt und zu einer Auslagerbahn führt. Die Einlagerbahn und die Auslagerbahn sind in voneinander beabstandeten Ebenen angeordnet. Wesentlich ist, dass jedes Modul eine Mehrzahl von Auslagerbahnen aufweist, die jeweils als Stauförderer ausgebildet sind. Auf diese Stauförderer kann das Lastaufnahmemittel die zu einem Auftrag gehörigen und in dem jeweiligen Modul zwischengespeicherten Ladungsträger eines Auftrags einzeln abstellen. Sämtliche Auslagerbahnen verlaufen parallel zueinander und enden im Abstand vor einer Förderbahn, die zum Versandbereich führt und quer zu den Auslagerbahnen verläuft. Zwischen den Auslagerbahnen und dieser Förderbahn ist ein verfahrbarer Übersetzer angeordnet, der im Sinne einer Förderkurve ausgebildet ist und wahlweise eine Förderverbindung zwischen einer beliebigen Auslagerbahn und der zum Versand führenden Förderbahn herstellt, so dass ein auf der Auslagerbahn stehender Ladungsträger auf die abtransportierende Förderbahn übergesetzt werden kann. Der Übersetzer ist daher in der Lage, die auszulagernden Ladungsträger in einer gewünschten Reihenfolge auf die abtransportierende Förderbahn überzusetzen, indem er die jeweiligen Auslagerbahnen in dieser vorgegebenen Reihenfolge anfährt. Bei dieser Art der Gestaltung eines Zwischenlagers zur Sequenzbildung steht überlicherweise eine hohe Lagerkapazität, d.h. eine Vielzahl von Abstellplätzen für Ladungsträger zur Verfügung. Beschränkungen sind dagegen zu sehen im Hinblick auf die Durchsatzleistung.

Die EP 1 354 828 A1 offenbart eine Vorrichtung zum Einsortieren, Lagern und Aussortieren von Gütern mit mindestens einem Regal mit Fächern, die in einer im Wesentlich senkrechten Ebene in einer Matrix mit einer ersten und einer zweiten Richtung zueinander angeordnet sind. Die Vorrichtung umfasst ferner eine erste Fördereinrichtung mit einem Tragrahmen, der mittels der ersten Fördereinrichtung in der ersten Richtung in einer im Wesentlichen senkrechten Ebene vor den Fächern verfahrbar ist. Zusätzlich ist mindestens eine an dem Tragrahmen angebrachte zweite Fördereinrichtung zum Fördern der Güter in der zweiten Richtung der im Wesentlichen senkrechten Ebene vor den Fächern vorgesehen. Weiterhin ist mehr als eine dritte Fördereinrichtung zum Fördern der Güter zwischen der zweiten Fördereinrichtung und einem Fach vorgesehen.

Aufgabe der vorliegenden Erfindung ist es, ein Zwischenlager zu schaffen, das sich bei vergleichsweise niedrigem Investitionsaufwand sowohl durch eine hohe Lagerkapazität als auch durch eine hohe Durchsatzleistung auszeichnet. Außerdem soll ein Verfahren zur Zwischenlagerung von Ladungsträgern angegeben werden, dessen Durchführung bei hoher Leistungsfähigkeit möglichst kostengünstig ist.

Gelöst wird diese Aufgabe bei einer gattungsgemäßen Vorrichtung durch die im Patentanspruchs 1 angegebenen Merkmale. Vorteilhafte Weiterbildungen dieser Vorrichtung sind in den Unteransprüchen 2-10 angegeben. Hinsichtlich des Verfahrens wird die Aufgabe gelöst durch ein Verfahren mit den im unabhängigen Patentanspruch 11 angegebenen Merkmalen. Weiterbildung dieses Verfahrens ergeben sich aus den Unteransprüchen 12-15. Die in den Unteransprüchen angeführten Einzelmerkmale sind jeweils in beliebiger Weise miteinander kombinierbar.

Die erfindungsgemäße Vorrichtung zur Sequenzbildung von Ladungsträgern ist insbesondere im Rahmen der Kommissionierung von Aufträgen und des anschließenden Versands von Bedeutung. Sie weist ein als Regal ausgebildetes Zwischenlager mit mehreren Regalebenen auf, in denen die einzelnen Ladungsträger zwischenlagerbar sind. Für den An- und Abtransport der Ladungsträger sind eine Zufördereinrichtung und eine Abfördereinrichtung vorgesehen. Ferner ist mindestens ein Lastaufnahmemittel vorgesehen, das horizontal entlang des Regals auf einem an einer Längsseite des Regals vertikal verfahrbaren Hubbalken verfahrbar ist und die Entnahme von Ladungsträgern aus der jeweiligen Lagerstelle im Regal für den Abtransport mit der Abfördereinrichtung ausführt. Weiterhin verfügt diese Vorrichtung über eine Einrichtung, die die auszulagernden Ladungsträger in einer gewünschten Reihenfolge auf der Abfördereinrichtung bereitstellt. Die Funktionen des Hubbalkens und des mindestens einen Lastaufnahmemittels werden dabei von einer elektronischen Steuerung gesteuert. Erfindungsgemäß ist ein Förderer wesentlicher Teil der Einrichtung zur Reihenfolgebildung der auszulagernden Ladungsträger, wobei dieser Förderer sich im Arbeitsbereich des mindestens einen Lastaufnahmemittels über die Länge des Regals erstreckt und darüber hinaus mit der Abfördereinrichtung fördertechnisch verbunden ist. Die elektronische Steuerung ist darauf eingerichtet, diesen Förderer und das mindestens eine Lastaufnahmemittel so zu steuern, dass die aus dem Regal ausgelagerten Ladungsträger auf dem Förderer in der gewünschten Reihenfolge liegen.

Wenngleich die erfindungsgemäße Vorrichtung auch mit einer einzelnen Zeile des Lagerregals ausführbar wäre, empfiehlt es sich, das Zwischenlager aus zwei sich parallel unter Belassung einer Regalgasse gegenüberliegenden Regaleinheiten aufzubauen, wobei der Hubbalken und der Förderer in der Lagergasse angeordnet sind. Dabei sollte im Interesse einer hohen Durchsatzleistung der Förderer fest auf dem Hubbalken angeordnet sein, also mit diesem zusammen vertikal verfahrbar sein. Zur weiteren Leistungssteigerung sollten auf dem Hubbalken möglichst zwei unabhängig voneinander, aber unter Beachtung des Kollisionsschutzes betreibbare Lastaufnahmemittel angeordnet sein.

Die Zufördereinrichtung für die Zuführung neu zwischenzulagernder Ladungsträger ist erfindungsgemäß an einer Stirnseite des Regals angebracht. Dadurch wird ein Verlust an Lagerplätzen vermieden, der sich bei Anordnung der Zufördereinrichtung an der Längsseite des Regals ergeben würde. Es empfiehlt sich, die Zufördereinrichtung in Form von zwei separaten Fördereinheiten auszubilden, wobei jede Fördereinheit jeweils einer Einheit des Regals zugeordnet ist. Da die Zufördereinrichtung, die beispielsweise in Form eines üblichen Band-, Gurt-, Rollen- oder Kettenförderers ausgebildet sein kann, in einer bestimmten Ebene an der Stirnseite des Regals endet, ist eine Hubeinrichtung beispielsweise in Form eines Förderliftes an der Regalstirnseite vorgesehen, die die Zufördereinrichtung mit den einzelnen Ebenen des Regals verbindet. Selbstverständlich sollte bei einem aus zwei Einheiten bestehenden Regal jede Einheit mit einer solchen Hubeinrichtung versehen sein.

Die Abfördereinrichtung wird zweckmäßig in der Weise angeordnet, dass sie in einer Grundstellung des Hubbalkens unmittelbar an den auf dem Hubbalken angeordneten Förderer anschließt, so dass für die Übergabe von Ladungsträgern an die Abfördereinrichtung keine zusätzlichen Handhabungsmittel notwendig sind.

Mit ganz besonderem Vorteil werden die einzelnen Regalebenen des Regals jeweils als Stauförderer, insbesondere als angetriebener Stauförderer, ausgebildet, wobei die Förderrichtung von der Zufördereinrichtung zur Abfördereinrichtung weist. Auf diese Weise können die neu zwischenzulagernden Ladungsträger über die erwähnte Hubeinrichtung ohne Zuhilfenahme des bzw. der Lastaufnahmemittel direkt an die Regalebenen übergeben werden und auf einen freien Abstellplatz transportiert werden. Das Lastaufnahmemittel ist also in jedem Fall hinsichtlich seiner Funktion nur auf die Auslagerung beschränkt. Die Einlagerung erfolgt vollständig unabhängig davon.

Es empfiehlt sich, das Zwischenlager mit mindestens 10, insbesondere mindestens 16 Regalebenen zu versehen, so dass eine ausreichende Anzahl von Abstellplätzen im Zwischenlager zur Verfügung gestellt werden kann.

Um eine ordnungsgemäße Reihenfolgebildung zu ermöglichen, empfiehlt es sich, den Antrieb für den Förderer, auf dem das Lastaufnahmemittel die jeweils auszulagernden Ladungsträger abstellt, reversierbar auszubilden.

Das erfindungsgemäße Verfahren zur Zwischenlagerung von Ladungsträgern geht aus von einem Verfahren, bei dem die Ladungsträger einem mehrere Regalebenen aufweisenden Zwischenlager über eine Zufördereinrichtung zugeführt und in einer gewünschten Reihenfolge auf eine Abfördereinrichtung ausgelagert werden. Dabei werden die eingelagerten Ladungsträger mittels mindestens eines Lastaufnahmemittels, welches auf einem Hubbalken horizontal und mit diesem zusammen vertikal verfahrbar ist, aus den jeweiligen Lagerstellen der Regalebenen wieder ausgelagert. Für ein solches Verfahren ist erfindunsgemäß vorgesehen, dass die auszulagernden Ladungsträger jeweils von dem mindestens einen Lastaufnahmemittel aus dem Abstellplatz im Regal aufgenommen und auf einer als Förderfläche eines Förderers ausgebildeten Ablagefläche abgelegt werden. Dabei können mehrere Ladungsträger durch zeitweilige Betätigung des Antriebs des Förderers und zeitlich darauf abgestimmte Betätigung des mindestens einen Lastaufnahmemittel unter Berücksichtigung der jeweiligen Lage der Lagerstellen der auszulagernden Ladungsträger in den Regalebenen auf der Ablagefläche in der gewünschten Reihenfolge positioniert werden. Die insoweit ausgelagerten und nebeneinander liegenden Ladungsträger werden durch Betätigung des Förderers an die Abfördereinrichtung abgegeben. Zweckmäßig werden mindestens bis zu vier, insbesondere mindestens bis zu sechs Ladungsträger gleichzeitig auf dem Förderer in der gewünschten Reihenfolge angestellt und dann batch-weise an die Abfördereinrichtung übergeben.

Bei fester Verbindung des Förderers mit dem Hubbalken erfolgt die Abgabe auszulagernder Ladungsträger an die Abfördereinrichtung, nachdem der Hubbalken in eine Höhenposition verfahren wurde, in der der Förderer mit der Abförderereinrichtung fördertechnisch verbunden ist.

Um eine größere Anzahl an Ladungsträgern in der richtigen Reihenfolge auf dem Förderer platzieren zu können, empfiehlt es sich, während der sukzessiven Beladung des Förderers dessen Förderrichtung zeitweilig umzukehren.

Die Einlagerung von Ladungsträgern ist erfindungsgemäß mittels einer stirnseitig am Regal angeordnete Hubeinrichtung durchgeführt. Dies ermöglicht eine Bedienung aller Regalebenen unabhängig von dem bzw. den Lastaufnahmemitteln und ist besonders vorteilhaft in Verbindung mit einer Anordnung der Lagerstellen der Regalebenen auf Stauförderern, auf denen sich entsprechend der Förderbewegung der ursprünglich eingenommene Abstellplatz im zeitlichen Verlauf verlagert. Der tatsächliche Lagerort innerhalb einer Regalebene kann von der elektronischen Steuerung der erfindungsgemäßen Anlage problemlos durch Kenntnis des jeweiligen Verfahrwegs des Stauförderers aktualisiert werden, so dass die für das Lastaufnahmemittel im Falle einer Auslagerung erforderlichen Fahrdaten ohne weiteres zur Verfügung gestellt werden können.

Nachfolgend wird die Erfindung anhand des in den Figuren in lediglich schematisierter Form dargestellten Ausführungsbeispiels näher erläutert. Es zeigen:
- Figur 1: eine erfindungsgemäße Vorrichtung mit zwei Regaleinheiten in Draufsicht,
- Figur 2: die Vorrichtung gemäß Figur 1 in Seitenansicht und
- Figur 3: die Vorrichtung gemäß Figur 2 in Stirnansicht.

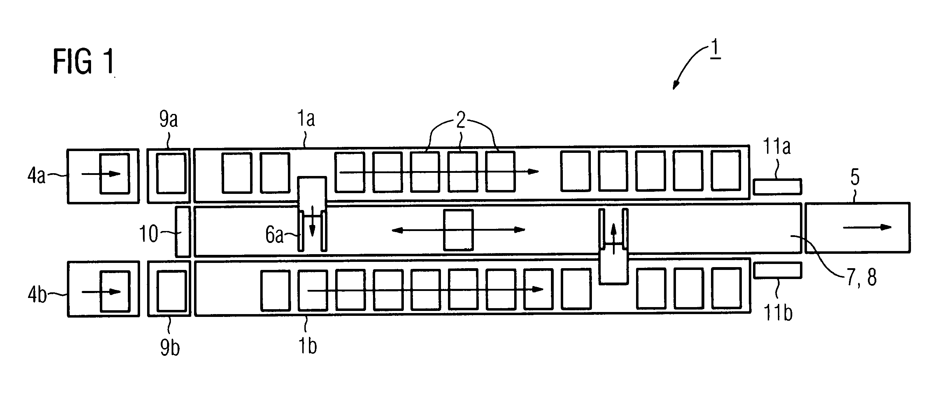

Das in den Figuren 1 - 3 in drei Ansichten dargestellte Ausführungsbeispiel für die Erfindung zeigt ein Regal 1, das aus zwei gleichartig aufgebauten Einheiten 1a, 1b besteht, die sich unter Belassung einer Lagergasse im Abstand parallel und spiegelbildlich gegenüberliegen. Jeder Regaleinheit 1a, 1b ist jeweils eine Fördereinheit 4a, 4b einer Zufördereinrichtung 4 zugeordnet, die an der linken Stirnseite des Regals 1 angeordnet ist und der Zuführung von neu an einer freien Lagerstelle einer der Regalebenen 3 des Regals 1 zwischenzulagernden Ladungsträgern 2 dient. Die einzelnen Regalebenen 3 sind vorzugsweise als Stauförderer ausgebildet, so dass die Belegung der Lagerstellen auf äußerst einfache und effektive Weise über eine Hubstation 9 erfolgen kann, die unmittelbar zwischen der Zufördereinrichtung 4 und der Stirnseite des Regals 1 angeordnet ist. Entsprechend der Aufgliederung der Zufördereinrichtung 4 und des Regals 1 in jeweils zwei Einheiten ist auch die Hubstation 9 auf zwei Einheiten 9a, 9b aufgeteilt und zugeordnet. Die Hubstation 9 besteht zweckmäßigerweise aus einer Fördereinrichtung, die in ihrer Höhenposition wahlweise auf die Höhenposition der Zufördereinrichtung 4 und die Höhenpositionen der Regalebenen 3 verfahrbar ist. Grundsätzlich wären aber auch andere Lösungen hierfür denkbar, beispielsweise der Einsatz eines Roboters als Umsetzer für die zwischenzulagernden Ladungsträger 2. Die Stauförderer sind zweckmäßigerweise motorisch angetrieben, könnten im Grundsatz aber auch als Schwerkraftförderer ausgebildet sein. Im Bereich der Lagergasse zwischen den Regaleinheiten 1a,1b ist ein Hubbalken 7 angeordnet, der sich über die gesamte Länge des Regals 1 erstreckt und an Führungssäulen 10, 11a, 11b, die an der linken bzw. rechten Stirnseite des Regals 1 angeordnet sind, vertikal verfahrbar ist. An oder auf diesem Hubbalken 7 ist ein Förderer 8 fest angeordnet, also gemeinsam mit dem Hubbalken 7 verfahrbar. Der Förderer 8 verfügt über einen motorischen Antrieb, der vorzugsweise reversierbar ist, um die Förderrichtung zeitweilig umkehren zu können, und der zweckmäßigerweise über einen in dem Sinne regelbaren Antrieb verfügt, dass die nicht dargestellte elektronische Steuerung des Regals 1, die sämtliche Antriebe steuert, über den Verfahrweg des Förderers 8 genau informiert ist. Dies könnte beispielsweise durch einen Schrittmotor gewährleistet sein. Dies ist erforderlich, damit die Steuerung zu jedem Zeitpunkt über die tatsächliche Position der auf dem Förderer aufliegenden Ladungsträger 2 informiert ist. Selbstverständlich wäre es auch möglich, diese Daten alternativ oder zur Sicherheit redundant über eine entsprechende Sensorik (z.B. Lichtschranken oder Videosystem) zu ermitteln. Auch dieser Förderer 8 erstreckt sich über die gesamte Regallänge. Weiterhin sind mindestens ein, im dargestellten Fall zwei Lastaufnahmemittel 6a, 6b in der Weise mit dem Hubbalken 7 verbunden, dass sie horizontal über dessen Länge verfahrbar sind. Diese Lastaufnahmemittel 6a, 6b können in entsprechender Weise ausgebildet sein wie die Lastaufnahmemittel üblicher Regalbediengeräte, also beispielsweise über ausfahrbare (teleskopierbare) Backengreifer, Sauggreifer oder den jeweiligen Ladungsträger 2 unterfahrende Band-, Gurt-, Ketten- oder Rollenförderer verfügen. Auf der rechten Stirnseite des Lagers 1 schließt sich an den Hubbalken 7 bzw. an dessen Förderer 8 eine Abfördereinrichtung 5 an, die dem Weitertransport ausgelagerter Ladungsträger 2 beispielsweise zu einem nicht dargestellten Versandbereich dient.

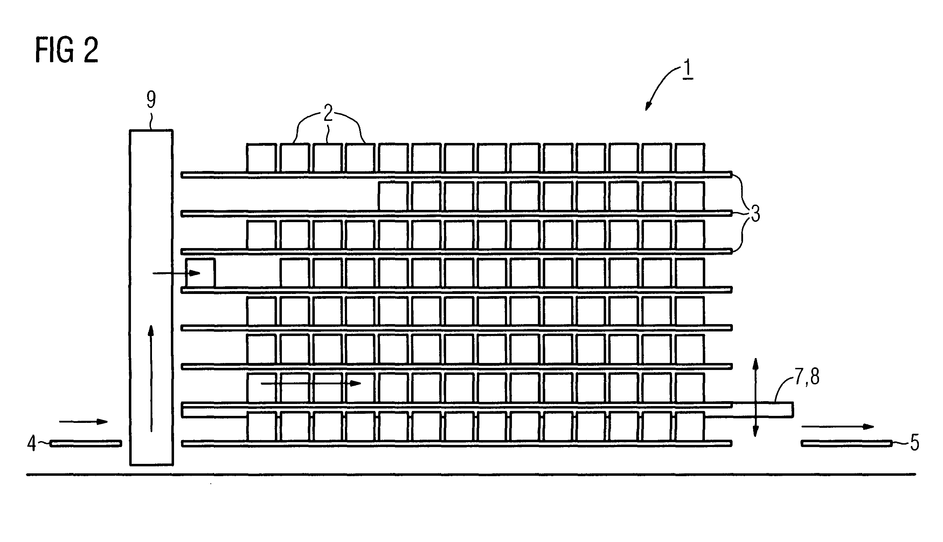

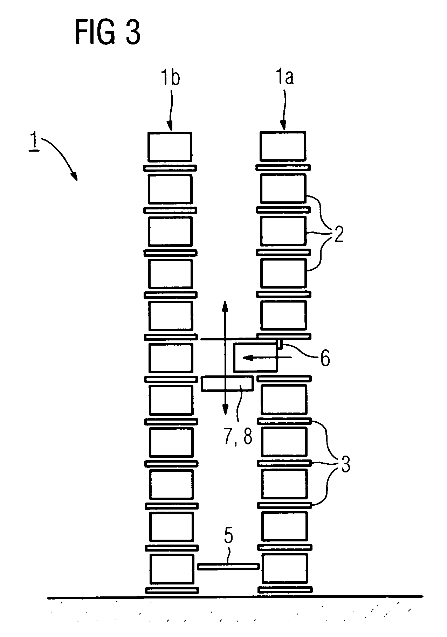

Aus der Figur 2 ist ersichtlich, dass der Hubbalken 7 mit dem Förderer 8 zur Abgabe von Ladungsträgern 2 zunächst auf die Höhenposition der Abfördereinrichtung 5 abgesenkt werden muss. Aus der Stirnansicht der Figur 3 ist ersichtlich, wie eine Greifeinrichtung des Lastaufnahmemittels 6 einen zwischengelagerten Ladungsträger 2 aus einem Lagerplatz einer Regalebene 3 heraus auf den Förderer 8 des Hubbalkens 7 zieht.

Die Arbeitsweise der erfindungsgemäßen Vorrichtung zur Zwischenspeicherung von Ladungsträgern ist wie folgt: Die z.B. im Rahmen einer Kommissionierung mit unterschiedlichen Artikeln befüllten Ladungsträger 2, die zweckmäßigerweise als Einheitslagerkästen ausgebildet sind, können in beliebiger Reihenfolge über die Zuförderereinheiten 4a, 4b dem Regal 1 zugeführt werden. Über die Einheiten 9a, 9b der Hubstation 9 werden sie einem freien Lagerplatz auf einer Regalebene 3 zugeleitet. Dabei empfiehlt es sich, die elektronische Steuerung so auszulegen, dass sie, sofern entsprechende freie Lagerkapazität zur Verfügung steht, die Ladungsträger 2, die jeweils zu demselben Auftrag gehören, auf der gleichen Regalebene 3 abstellt, um die spätere Auslagerung zu beschleunigen. Dies ist aber keineswegs zwingend erforderlich. Da die Regalebenen 3 jeweils als Stauförderer ausgebildet sind, erreichen die von der Hubstation 9 abgesetzten Ladungsträger 2 ihren Abstellplatz (Stauplatz) zur Zwischenlagerung allein durch die Förderbewegung des jeweiligen Stauförderers. Die Steuerung ist selbstverständlich darüber informiert, welcher Ladungsträger 2 jeweils an welcher Position des Stauförderers steht. Infolge der Entnahme von zwischengespeicherten Ladungsträgern 2 kann sich die Position eines Ladungsträgers 2 auf dem Stauförderer ständig ändern. Dies wird in der Steuerung entsprechend aktualisiert. Die Lastaufnahmemittel 6a, 6b sind somit in keiner Weise mit den Vorgängen der Einlagerung neu zwischenzuspeichernder Ladungsträger 2 befasst, sondern sind ausschließlich für die Auslagerung der Ladungsträger 2 zuständig. Die zu einem Auftrag gehörigen Ladungsträger 2 werden von den beiden Lastaufnahmemittel 6a, 6b nacheinander aus den jeweiligen Abstellplätzen der Lagerebenen 3 herausgeholt und in einer solchen Reihenfolge auf dem Förderer 8 abgestellt, wie es der Vorgabe für den Transport an den Versandbereich entspricht. Dazu ist es aber nicht unbedingt notwendig, dass die Auslagerung der Ladungsträger aus den Lagerebenen 3 genau in dieser gewünschten Reihenfolge erfolgt. Vielmehr können die beiden Lastaufnahmemittel 6a, 6b die Ladungsträger 2 so übernehmen, dass sie zum Anfahren der jeweiligen Position möglichst kurze Wege benötigen. Durch Vor- oder Zurückfahren der Förderfläche des Förderers 8 (in Figur 2 durch einen Doppelpfeil angedeutet) kann die Position der bereits auf dem Förderer 8 liegenden Ladungsträger 2 je nach Bedarf gleichsam vor- oder zurückgestellt werden, um die richtige Reihenfolge einzuhalten. Wenn die zu einem Auftrag gehörigen Ladungsträger 2 alle auf der gleichen Lagerebene 3 abgestellt sind, braucht der Hubbalken 7 während der Beladung des Förderers 8 mit den Ladungsträgern 2 nicht verfahren zu werden. Sind dagegen die zugehörigen Ladungsträger 2 auf verschiedene Lagerebenen 3 verteilt, so müssen letztere nacheinander durch Absenken oder Anheben des Hubbalkens 7 angefahren werden. Zweckmäßigerweise sind die Lastaufnahmemittel 6a, 6b so ausgebildet, dass sie jeweils Ladungsträger 2 aus beiden Regaleinheiten 1a,1b entnehmen können. Dies ist insbesondere vorteilhaft im Hinblick auf die Ausfallsicherheit (Redundanz). Selbstverständlich kann es auch vorgesehen sein, dass jedes Lastaufnahmemittel 6a, 6b nur jeweils eine der beiden Regaleinheiten 1 a, 1 b bedienen kann. Sobald die zu einem Auftrag gehörigen Ladungsträger 2 auf dem Förderer 8 gesammelt sind, wird der Hubbalken in eine der Abfördereinrichtung 5 entsprechende Höhenposition gebracht, sofern er diese nicht bereits vorher schon erreicht hatte, und es werden dann die ausgelagerten Ladungsträger 2 an die Abfördereinrichtung 5 durch Betätigung des Förderers 8 übergeben. Selbstverständlich ist es auch möglich, dass ein Auftrag mit sehr vielen Ladungsträgern 2, die nicht zusammen Platz haben auf dem Förderer 8, in mehreren Batches ausgelagert wird. Die Steuerung sorgt jedoch dafür, dass über alle Batches die gewünschte Reihenfolge eingehalten wird und dass die Batches unmittelbar hintereinander angeliefert werden, um keine Verzögerungen beim Versand hervorzurufen. Bei Aufträgen, die nur sehr wenige Ladungsträger umfassen, ist es auch möglich, die Ladungsträger 2 für mehrere Aufträge auf dem Förderer 8 in der jeweiligen Reihenfolge zusammenzustellen und diese dann gemeinsam in einem Batch an die Abfördereinrichtung 5 abzugeben, um die Durchsatzleistung insgesamt auf einem hohen Niveau zu halten.

Eine für die praktische Anwendung geeignete Ausführung der erfindungsgemäßen Vorrichtung kann beispielsweise eine Regallänge und Hubbalkenlänge von etwa 7,5m aufweisen. Bei Ladungsträgern, die die Größe häufig eingesetzter Lagerbehälter aufweisen, entspricht dies einer Anzahl von etwa 14 Stauplätzen je Regalebene. Bei einer Regalhöhe von 10 Metern umfasst ein solches Regal z.B. etwa 16 Regalebenen. Wird das Regal zweckmäßigerweise mit zwei Regaleinheiten ausgestattet, bedeutet dies eine Lagerkapazität für insgesamt 14 * 16 * 2 = 448 Ladungsträger. Zweckmäßigerweise wird die Steuerung so ausgelegt, dass auf dem Förderer des Hubbalkens maximal lediglich sechs bis sieben Ladungsträger gleichzeitig aufgenommen werden dürfen. Dies reduziert die Erfordernisse an die Genauigkeit der Positionierung der Ladungsträger 2 auf dem Förderer 8 erheblich und erleichtert gleichzeitig die Reihenfolgebildung, da auf diese Weise bei Bedarf leichter einzelne Ladungsträger zwischen jeweils zwei bereits ausgelagerte Ladungsträger positioniert werden können. Durch die vollständige Entkopplung der Einlager- und Auslagervorgänge kann eine äußerst hohe Durchsatzleistung gewährleistet werden, die beispielsweise für den vorstehend beschriebenen Anwendungsfall bei über 500 Lagerdoppelspielen pro Stunde liegt. Gleichzeitig wird eine hohe Kapazität an Zwischenspeicherplätzen erreicht. Der hierfür erforderliche Investitionsaufwand gegenüber den aus dem Stand der Technik bekannten Alternaivlösungen ist beträchtlich niedriger.

## Patentansprüche

1. Vorrichtung zur Sequenzbildung von Ladungsträgern (2), insbesondere im Rahmen der Kommissionierung, mittels eines als Regal (1) mit mehreren Regalebenen (3) ausgebildeten Zwischenlagers, in denen die Ladungsträgern (2) zwischenlagerbar sind, mit einer Zufördereinrichtung (4), mit einer Abfördereinrichtung (5), ferner mit mindestens einem Lastaufnahmemittel (6), das horizontal entlang des Regals (1) auf einem an einer Längsseite des Regals (1) vertikal verfahrbaren Hubbalken (7) verfahrbar ist und die Entnahme von Ladungsträgern (2) aus der jeweiligen Lagerstelle im Regal (1) für den Abtransport mit der Abfördereinrichtung (5) bewirkt, und mit einer Einrichtung, die die auszulagernden Ladungsträgern (2) in einer gewünschten Reihenfolge auf der Abfördereinrichtung (5) bereitstellt, sowie mit einer elektronischen Steuerung zur Steuerung der Funktionen des Hubbalkens (7) und des mindestens einen Lastaufnahmemittels (6), wobei die Einrichtung zur Reihenfolgebildung der auszulagernden Ladungsträgern (2) einen Förderer (8) umfasst, der sich im Arbeitsbereich des mindestens einen Lastaufnahmemittels (6) über die Länge des Regals (1) erstreckt und mit der Abfördereinrichtung (5) verbunden oder verbindbar ist, wobei die elektronische Steuerung darauf eingerichtet ist, den Förderer (8) und das mindestens eine Lastaufnahmemittel (6) so zu steuern, dass die aus dem Regal (1) ausgelagerten Ladungsträger (2) auf dem Förderer (8) in der gewünschten Reihenfolge liegen und wobei die Zufördereinrichtung (4) über eine Hubeinrichtung (9) mit dem Regal (1) verbunden ist, insbesondere über eine aus zwei Einheiten (9a, 9b) bestehende Hubeinrichtung (9), von denen jede jeweils einer Einheit (1 a, 1 b) des Regals (1) zugeordnet ist.

2. Vorrichtung nach Anspruch 1,
**dadurch gekennzeichnet,**
**dass** das Zwischenlager zwei sich parallel unter Belassung einer Regalgasse gegenüberliegende Einheiten (1a, 1b) des Regals (1) umfasst, wobei der Hubbalken (7) und der Förderer (8) in der Lagergasse angeordnet sind.

3. Vorrichtung nach Anspruch 2,
**dadurch gekennzeichnet,**
**dass** der Förderer (8) fest auf dem Hubbalken (7) angeordnet ist.

4. Vorrichtung nach Anspruch 1 - 3,
**dadurch gekennzeichnet,**
**dass** mindestens zwei Lastaufnahmemittel (6a, 6b) auf dem Hubbalken (7) angeordnet sind.

5. Vorrichtung nach Anspruch 1 - 4,
**dadurch gekennzeichnet,**
**dass** die Zufördereinrichtung (4) an einer Stirnseite des Regals (1) angeordnet ist.

6. Vorrichtung nach Anspruch 2 und 5,
**dadurch gekennzeichnet,**
**dass** die Zufördereinrichtung (4) zwei Fördereinheiten (4a, 4b) umfasst und **dass** jeder Einheit (1a, 1b) des Regals (1) eine der Fördereinheiten (4a, 4b) zugeordnet ist.

7. Vorrichtung nach Anspruch 1 - 6,
**dadurch gekennzeichnet,**
**dass** die Abfördereinrichtung (5) in einer Grundstellung des Hubbalkens (7) unmittelbar an den Förderer (8) anschließt.

8. Vorrichtung nach Anspruch 5 und 78,
**dadurch gekennzeichnet,**
**dass** die Regalebenen (3) als Stauförderer, insbesondere als angetriebene Stauförderer ausgebildet sind, deren Förderrichtung von der Zufördereinrichtung (4) zur Abfördereinrichtung (5) verläuft.

9. Vorrichtung nach Anspruch 8,
**dadurch gekennzeichnet,**
**dass** das Zwischenlager mindestens 10, insbesondere 16 Regalebenen (3) umfasst.

10. Vorrichtung nach Anspruch 1 - 9,
**dadurch gekennzeichnet,**
**dass** die Förderrichtung des Förderers (8) reversierbar ist.

11. Verfahren zur Zwischenlagerung von Ladungsträgern (2), die einem mehrere Regalebenen (3) aufweisenden Zwischenlager über eine Zufördereinrichtung (4) zugeführt und in einer gewünschten Reihenfolge der Ladungsträger (2) auf eine Abfördereinrichtung (5) ausgelagert werden, wobei die eingelagerten Ladungsträgern (2) mittels mindestens eines Lastaufnahmemittels (6), welches auf einem Hubbalken (7) horizontal und mit diesem zusammen vertikal verfahrbar ist, aus den jeweiligen Lagerstellen der Regalebenen (39 wieder ausgelagert werden, insbesondere unter Benutzung einer Vorrichtung nach einem der Ansprüche 1 - 10, wobei die auszulagernden Ladungsträgern (2) jeweils von dem mindestens einen Lastaufnahmemittel (6) aufgenommen und auf einer als Förderfläche eines Förderers (8) ausgebildeten Ablagefläche abgelegt werden, wobei mehrere Ladungsträger (2) durch gegebenenfalls zeitweilige Betätigung des Antriebs des Förderers (8) und zeitlich darauf abgestimmte Betätigung des mindestens einen Lastaufnahmemittels (6) unter Berücksichtigung der jeweiligen Lage der Lagerstellen der auszulagernden Ladungsträger (2) in den Regalebenen (3) auf der Ablagefläche in der gewünschten Reihenfolge positioniert werden und die ausgelagerten nebeneinander liegenden Ladungsträger (2) durch Betätigung des Förderers (8) an die Abfördereinrichtung (5) abgegeben werden, wobei die Einlagerung von Ladungsträgern (2) mittels einer stirnseitig am Regal (1) angeordneten Hubeinrichtung (9) durchgeführt wird.

12. Verfahren nach Anspruch 11,
**dadurch gekennzeichnet,**
**dass** der Förderer (8) fest an oder auf dem Hubbalken (7) angeordnet ist und die Abgabe auszulagernder Ladungsträger (2) an die Abfördereinrichtung (5) erfolgt, nachdem der Hubbalken (7) in eine Höhenposition verfahren wurde, in der der Förderer (8) mit der Abfördereinrichtung (5) verbunden ist.

13. Verfahren nach Anspruch 11 - 12,
**dadurch gekennzeichnet,**
**dass** während der sukzessiven Beladung des Förderers (8) dessen Förderrichtung zur ordnungsgemäßen Reihenfolgebildung der Ladungsträger (2) zeitweilig umgekehrt wird.

14. Verfahren nach Anspruch 11 - 13,
**dadurch gekennzeichnet,**
**dass** die Lagerstellen der Regalebenen (3) jeweils auf einem Stauförderer
angeordnet sind und sich im Zeitverlauf verlagern.

15. Verfahren nach Anspruch 11 - 14,
**dadurch gekennzeichnet,**
**dass** mindestens bis zu vier, insbesondere mindestens bis zu sechs Ladungsträger (2) gleichzeitig auf dem Förderer (8) in der gewünschten Reihenfolge abgestellt und dann batch-weise an die Abfördereinrichtung (5) übergeben werden.

## Claims

1. Arrangement for forming sequences of load-carriers (2), particularly in the context of order picking, by means of a buffer store in the form of shelving (1) which has a plurality of levels (3) on which the load-carriers (2) can be buffer-stored, having an infeed means (4), having an outfeed means (5) and also having at least one load-receiving means (6) which is able to be displaced horizontally along the shelving (1) on a lifting beam (7) able to be displaced vertically on a longitudinal side of the shelving (1) and which effects the removal of load-carriers (2), from their respective storage locations on the shelving (1), for transport away by the outfeed means (5), and having a means which presents the load-carriers (2) to be withdrawn from store in a desired sequence on the outfeed means (5), and also having an electronic control system for controlling the operations of the lifting beam (7) and of the at least one load-receiving means (6), in which the means for forming sequences of the load-carriers (2) to be withdrawn from store comprises a conveyor (8) which extends for the length of the shelving (1) in the working region of the at least one load-receiving means (6) and which is connected or connectable to the outfeed means (5), in which the electronic control system is set up to control the conveyor (8) and the at least one load-receiving means (6) in such a way that the load-carriers (2) which are removed from store on the shelving (1) are situated on the conveyor (8) in the desired sequence, and wherein the infeed means (4) is connected to the shelving (1) via a lifting means (9), and in particular via a lifting means (9) which comprises two units (9a, 9b) which are associated with respective units (1a, 1b) of the shelving (1).

2. Arrangement according to claim 1, **characterised in that** the buffer store comprises two units (1a, 1b) of the shelving (1) which are situated parallel to and opposite one another while leaving an aisle in the shelving, the lifting beam (7) and the conveyor (8) being arranged in the aisle of the store.

3. Arrangement according to claim 2, **characterised in that** the conveyor (8) is arranged in a fixed position on the lifting beam (7).

4. Arrangement according to claims 1 - 3, **characterised in that** at least two load-receiving means (6a, 6b) are arranged on the lifting beam (7).

5. Arrangement according to claims 1 - 4, **characterised in that** the infeed means (4) is arranged at an end of the shelving (1).

6. Arrangement according to claims 2 and 5, **characterised in that** the infeed means (4) comprises two feeding units (4a, 4b) and **in that** each unit (1a, 1b) of the shelving (1) has one of the feeding units (4a, 4b) associated with it.

7. Arrangement according to claims 1 - 6, **characterised in that**, when the lifting beam (7) is in a basic position, the outfeed means (5) follows on directly from the conveyor (8).

8. Arrangement according to claims 5 and 7, **characterised in that** the levels (3) of the shelving take the form of accumulating conveyors, and particularly driven accumulating conveyors, whose direction of conveyance runs from the infeed means (4) to the outfeed means (5).

9. Arrangement according to claim 8, **characterised in that** the buffer store comprises at least ten and in particular sixteen levels (3) of the shelving.

10. Arrangement according to claims 1-9, **characterised in that** the direction of conveyance of the conveyor (8) is reversible.

11. Method of buffer-storing load-carriers (2) which are fed to a buffer store having a plurality of levels of shelving (3) by means of an infeed means (4) and which are removed from store onto an outfeed means (5) with the load-carners (2) in a desired sequence, the load-carriers (2) which have been placed in store being removed again from store, from their respective storage locations on the levels (39 of the shelving, by means of at least one load-receiving means (6) which is displaceable horizontally on a lifting beam (7) and vertically together with the latter, the method employing in particular an arrangement according to one of claims 1-10, the load-carriers (2) to be removed from store each being picked up by the at least one load-receiving means (6) and being placed down on a placing-down surface in the form of a conveying surface of a conveyor (8), a plurality of load-carriers (2) being positioned on the placing-down surface in the desired sequence by the actuation of the drive of the conveyor (8), intermittently if required, and by the actuation, at times matched thereto, of the at least one load-receiving means (6), while allowing for the respective positions of the storage locations of the load-carriers (2) to be removed from store on the levels (3) of the shelving, and the load-carriers (2) which have been removed from store, which are lying next to one another, being delivered to the outfeed means (5) by the actuation of the conveyor (8), wherein the placing in store of load-carriers (2) is performed by means of a lifting means (9) arranged at an end of the shelving (1).

12. Method according to claim 11, **characterised in that** the conveyor (8) is arranged in a fixed position on the lifting beam (7) and the delivery of the load-carriers (2) to be removed from store to the outfeed means (5) takes place after the lifting beam (7) has been displaced to a position in the vertical direction in which the conveyor (8) is connected to the outfeed means (5).

13. Method according to claims 11 - 12, **characterised in that**, during the successive loading of the conveyor (8), its direction of conveyance is reversed intermittently to allow the load-carriers (2) to be properly formed into a sequence.

14. Method according to claims 11 - 13, **characterised in that** the storage locations on the levels (3) of the shelving are each arranged on an accumulating conveyor and shift over the course of time.

15. Method according to claims 11 - 14, **characterised in that** at least up to four, and in particular at least up to six, load-carriers (2) are placed down simultaneously on the conveyor (8) in the desired sequence and are then transferred to the outfeed means (5) as a batch.

## Revendications

1. Dispositif de formation de séquence de porte-charges (2), notamment dans le cadre de la préparation de commandes, au moyen d'un entrepôt provisoire qui est conformé en rayonnage (1) sur plusieurs niveaux de rayonnage (3) dans lesquels les porte-charges (2) peuvent être stockés provisoirement, ledit dispositif de formation de séquence comportant un dispositif d'amenée (4), un dispositif d'enlèvement (5), en outre au moins un moyen de réception de charges (6) qui est déplaçable horizontalement le long du rayonnage (1) sur une poutre de levage (7) qui est déplaçable verticalement sur un côté longitudinal du rayonnage (1), et effectue le retrait de porte-charges (2) de l'emplacement de stockage respectif dans le rayonnage (1) pour les emporter avec le dispositif d'enlèvement, et un dispositif qui délivre les supports de charge (2) à déstocker, dans un ordre souhaité, sur le dispositif d'enlèvement (5), ainsi qu'une commande électronique destinée à commander les fonctions de la poutre de levage (7) et de l'au moins un moyen de réception de charges (6), le dispositif de formation ordonnée des supports de charge (2) à déstocker comportant un transporteur (8) qui s'étend sur la longueur du rayonnage (1) dans la zone d'opération de l'au moins un moyen de réception de charges (6) et qui est relié ou peut être relié au dispositif d'enlèvement (5), la commande électronique étant destinée à commander le transporteur (8) et l'au moins un moyen de réception de charges (6) de sorte que les porte-charges (2) déstockés du rayonnage (1) se retrouvent sur le transporteur (8) dans l'ordre souhaité et le dispositif d'amenée (4) étant relié au rayonnage (1) par un dispositif de levage (9), notamment par un dispositif de levage (9) qui est constitué de deux unités (9a, 9b) qui sont associées respectivement à une unité (1a, 1b) du rayonnage (1).

2. Dispositif selon la revendication 1, **caractérisé en ce que** l'entrepôt provisoire comporte deux unités (1a, 1b) du rayonnage (1) qui sont disposées parallèlement l'une en face de l'autre en ménageant une allée de rayonnage, la poutre de levage (7) et le transporteur (8) étant disposés dans l'allée de stockage.

3. Dispositif selon la revendication 2, **caractérisé en ce que** le transporteur (8) est disposé de façon fixe sur la poutre de levage (7).

4. Dispositif selon les revendications 1 à 3, **caractérisé en ce qu'**au moins deux moyens de réception de charges (6a, 6) sont disposés sur la poutre de levage (7).

5. Dispositif selon les revendications 1 à 4, **caractérisé en ce que** le dispositif d'amenée (4) est disposé sur un côté frontal du rayonnage (1).

6. Dispositif selon les revendications 2 et 5, **caractérisé en ce que** le dispositif d'amenée (4) comporte deux unités de transport (4a, 4b) et **en ce qu'**à chaque unité (1a, 1b) du rayonnage (1) est associée l'une des unités de transport (4a, 4b).

7. Dispositif selon les revendications 1 à 6, **caractérisé en ce que** le dispositif d'enlèvement (5) est directement raccordé au transporteur (8) lorsque la poutre de levage (7) est dans sa position initiale.

8. Dispositif selon les revendications 5 et 7, **caractérisé en ce que** les niveaux de rayonnage (3) sont conformés en transporteur d'accumulation, notamment en transporteur d'accumulation entraîné, dont le sens de transport va du dispositif d'amenée (4) au dispositif d'enlèvement (5).

9. Dispositif selon la revendication 8, **caractérisé en ce que** l'entrepôt provisoire comporte au moins 10, notamment 16, niveaux de rayonnage (3).

10. Dispositif selon les revendications 1 à 9, **caractérisé en ce que** le sens de transport du transporteur (8) est réversible.

11. Procédé de stockage provisoire de porte-charges (2) qui sont amenés à un entrepôt provisoire, comportant plusieurs niveaux de rayonnage (3), par un dispositif d'amenée (4) et qui sont déstockés et placés sur un dispositif d'enlèvement (5) dans un ordre souhaité des porte-charges (2), les porte-charges stockés (2) étant de nouveau déstockés des emplacements de stockage respectifs des niveaux de rayonnage (3) à l'aide d'au moins un moyen de réception de charges (6) qui est déplaçable horizontalement sur une poutre de levage (7) et verticalement avec celle-ci, notamment en utilisant un dispositif selon l'une des revendications 1 à 10, les porte-charges (2) à déstocker étant reçus à chaque fois par l'au moins un moyen de réception de charges (6) et étant déposés sur une surface de réception conformée en surface de transport d'un transporteur (8), plusieurs porte-charges (2) étant positionnés sur la surface de réception dans l'ordre souhaité en actionnant, éventuellement temporairement, l'entraînement du transporteur (8) et en actionnant, de façon coordonnée dans le temps, l'au moins un moyen de réception de charges (6) en tenant compte de la position respective des emplacements de stockage des porte-charges (2) à déstocker dans les niveaux de rayonnage (3) et les porte-charges (2) déstockés, qui se trouvent l'un à côté de l'autre, étant délivrés au dispositif d'enlèvement (5) en actionnant le transporteur (8), le stockage de porte-charges (2) étant effectué au moyen d'un dispositif de levage (9) disposé du côté frontal sur le rayonnage (1).

12. Procédé selon la revendication 11, **caractérisé en ce que** le transporteur (8) est disposé de façon fixe contre ou sur la poutre de levage (7) et délivre des porte-charges (2) à déstocker au dispositif d'enlèvement (5) après que la poutre de levage (7) a été placée dans une position en hauteur dans laquelle le transporteur (8) est relié au dispositif d'enlèvement (5).

13. Procédé selon les revendications 11 et 12, **caractérisé en ce que**, pendant le chargement successif du transporteur (8), le sens de transport est temporairement inversé afin de former de façon ordonnée les porte-charges (2).

14. Procédé selon les revendications 11 à 13, **caractérisé en ce que** les emplacements de stockage des niveaux de rayonnage (3) sont à chaque fois disposés sur un transporteur d'accumulation et se déplacent dans le temps.

15. Procédé selon les revendications 11 à 14, **caractérisé en ce qu'**au moins quatre, notamment au moins six, porte-charges (2) sont déposés simultanément sur le transporteur (8) dans l'ordre souhaité puis sont transférés par lot sur le dispositif d'enlèvement (5).
